# EUROPÄISCHE PATENTANMELDUNG

(11) **EP 2 570 371 A1**
(43) Veröffentlichungstag der Anmeldung: **20.03.2013**
(21) Anmeldenummer: 11181632.8
(22) Anmeldetag: 16.09.2011
(51) Int. Cl.: B65G 49/06, C03B 33/03, B27B 31/04

(54) **Verfahren und Vorrichtung zum Teilen von grossen Tafeln**

(71) Anmelder: Hiltbrand, Roland, 4800 Zofingen (CH)
(72) Erfinder: Hiltbrand, Roland, 4800 Zofingen (CH)
(74) Vertreter: Frischknecht, Harry Ralph

(57) **Zusammenfassung**

Ein Verfahren zum Trennen bzw. Schneiden von Platten (1) ist gekennzeichnet durch die die Schritte
- des Bewegens der zu trennenden Platte von einer Zuführeinheit (2) in eine Trenneinheit (3) entlang einer Bewegungsrichtung (BR) in einer Bewegungsebene (BE);
- des Trennens der Platte (1) in der Trenneinheit (3) entlang einer Trennrichtung (TR), so dass ein restlicher Plattenteil (7) und abgetrennter Plattenteil (4) entsteht;
- des Zuführens des abgetrennten Plattenteils (4) zu einer Rückführeinheit (5);
- des Rückführens des abgetrennten Plattenteils (4) entlang einer Rückführrichtung (RR) mittels der Rückführeinheit (5);
- des Zuführens des abgetrennten Plattenteils (4) zu einer Schwenkeinheit (6),
- des Verschwenkens des abgetrennten Plattenteils (4) mittels der Schwenkeinheit (6) entlang einer Schwenkbewegung (S);
- der erneuten Zuführung des abgetrennten und verschwenkten Plattenteils (4) zur Zuführeinheit (2) und zur Trenneinheit (3); und
- des Trennens des abgetrennten Plattenteils (4) durch die Trenneinheit (3) entlang einer Trennrichtung (TR).

## Beschreibung

### TECHNISCHES GEBIET

Die vorliegende Erfindung betrifft ein Verfahren zur Teilung von Tafeln, insbesondere Glasscheiben, nach dem Oberbegriff von Anspruch 1 und eine entsprechende Vorrichtung nach dem Oberbegriff von Anspruch 11.

### STAND DER TECHNIK

Aus der US 7,255,253 ist eine Vorrichtung zum Schneiden von Glasplatten bekannt. Dabei werden die Glasplatten in einer ersten Station entlang einer ersten Richtung geschnitten. Anschliessend werden die Glasplatten einer weiteren Schneideinrichtung zugeführt, welche dann die Platten entlang einer zweiten Richtung, welche typischerweise senkrecht zur ersten Richtung verläuft geschnitten.

Nachteilig an der Vorrichtung nach der US 7,255,253 ist die Tatsache, dass die Vorrichtung aufgrund der mehrfachen Umlenkung nur auf einer sehr grossen Fläche angeordnet werden kann. Im Hinblick auf die steigenden Bodenpreise ist dies ein grosser Nachteil. Weiter muss auch die Fabrikhalle, in welcher eine solche Vorrichtung angeordnet ist, entsprechend dimensioniert werden, was auch Baukosten, Energiekosten etc. massiv in die Höhe treibt.

### DARSTELLUNG DER ERFINDUNG

Ausgehend von diesem Stand der Technik liegt der Erfindung eine Aufgabe zugrunde, ein Verfahren zum Schneiden bzw. Trennen von Tafeln oder Platten anzugeben, welches bei der Umsetzung bzw. Anwendung weniger Platz bzw. Fläche benötigt.

Eine solche Aufgabe löst ein Verfahren zum Schneiden bzw. Trennen von Tafeln oder Platten nach Anspruch 1. Demgemäss umfasst ein Verfahren zum Trennen bzw. Schneiden von Platten die Schritte:
- des Bewegens der zu trennenden Platte von einer Zuführeinheit in eine Trenneinheit entlang einer Bewegungsrichtung in einer Bewegungsebene;
- des Trennens der Platte in der Trenneinheit entlang einer Trennrichtung, so dass ein restlicher Plattenteil und abgetrennter Plattenteil entsteht;
- des Zuführens des abgetrennten Plattenteils zu einer Rückfiihreinheit;
- des Rückführens des abgetrennten Plattenteils entlang einer Rückführrichtung mittels der Rückführeinheit;
- des Zuführens des abgetrennten Plattenteils zu einer Schwenkeinheit;
- des Verschwenkens des abgetrennten Plattenteils mittels der Schwenkeinheit entlang einer Schwenkbewegung;
- der erneuten Zuführung des abgetrennten und verschwenkten Plattenteils zur Zuführeinheit und zur Trenneinheit; und
- des Trennens des abgetrennten Plattenteils durch die Trenneinheit entlang einer Trennrichtung.

Durch die Verschwenkung mit der Schwenkeinheit kann eine besonders einfache und vor allem kompakte Vorrichtung bereitgestellt werden.

Während des Schrittes des Rückführens und des Verschwenkens wird der abgetrennte Plattenteil also wieder der Zuführeinheit zugeführt.

Vorzugsweise wird der durch die Rückführeinheit bewegte abgetrennte Plattenteil in einer von der Bewegungsebene unterschiedlichen Rückführebene bewegt, wobei die Rückführebene bezüglich der Richtung der Schwerkraft gesehen oberhalb oder unterhalb der Bewegungsebene liegt.

Durch die Rückführung in einer Ebene oberhalb oder unterhalb der Bewegungsebene kann die Vorrichtung noch kompakter bereitgestellt werden. Bevorzugterweise liegen die Rückführrichtung und die Bewegungsrichtung im Wesentlichen exakt übereinander bzw. untereinander, so dass hier weiterer Platz eingespart werden kann.

Vorzugsweise verläuft die Rückführrichtung gegen die Bewegungsrichtung, so dass der abgetrennte Plattenteil durch die Rückführeinheit entgegen der Bewegungsrichtung bewegbar ist.

Vorzugweise erfolgt die Schwenkbewegung des abgetrennten Plattenteils in einer Ebene, welche parallel versetzt von der Bewegungsebene liegt und vorzugsweise der Rückführebene entspricht.

Vorzugsweise wird während oder nach dem Schritt des Verschwenkens des abgetrennten Plattenteils der abgetrennte Plattenteil von der Rückführebene in die Bewegungsebene bewegt, wobei diese Bewegung bevorzugt durch die Schwenkeinheit bereitgestellt wird. Bei der kombinierten Bewegung und Verschwenkung kann die Taktzeit weiter reduziert werden.

Das Verfahren umfasst vorzugsweise weiter den Schritt des Trennens des restlichen Plattenteils durch die Trenneinheit, so dass ein weiteres abgetrenntes Plattenteil entsteht, welches dann der Rückführeinheit, Schwenkeinheit und Trenneinheit zuführbar ist, wobei dieser Schritt des Trennens vorzugweise im Wesentlichen zeitgleich mit der Rückführung bzw. Verschwenkung des bereits abgetrennten Plattenteils erfolgt. Die Zuführeinheit, Rückführeinheit, Schwenkeinheit und Trenneinheit können dabei mit einem entsprechenden Takt, also getaktet, betrieben werden.

Weiter umfasst das Verfahren den Schritt des Rückführens des gesamten restlichen Plattenteils, wobei das gesamte restliche Plattenteil der Schwenkeinheit und Trenneinheit zuführbar ist, wobei dieser Schritt des Trennens vorzugweise im Wesentlichen zeitgleich mit der Rückführung bzw. Verschwenkung des bereits abgetrennten Plattenteils erfolgt.

Vorzugsweise umfasst das Verfahren weiter den Schritt des Wegführens des abgetrennten Plattenteils bzw. des restlichen Plattenteils, wenn das abgetrennte Plattenteil bzw. das restliche Plattenteil auf ein vordefiniertes bzw. gewünschtes Mass verkleinert wurde, wobei das entsprechende Plattenteil vorzugweise einer Wegführeinheit zugeführt wird. Vorzugsweise umfasst das Verfahren weiterhin den Schritt des Speichern der abgetrennten Plattenteile bzw. der restlichen Plattenteile in einer Speichereinheit, den Schritt der Entnahme von gespeicherten Plattenteilen aus der Speichereinheit und den Schritt der Zuführung der aus der Speichereinheit entnommenen Plattenteile zur Rückführeinheit oder zur Schwenkeinheit oder zur Zuführeinheit.

Eine Vorrichtung zur Durchführung des Verfahrens nach einem obiger Beschreibung umfasst eine Zuführeinheit, eine Trenneinheit mit einem Trennelement, eine Rückführeinheit und eine Schwenkeinheit, wobei
- die zu trennende Platte von der Zuführeinheit in die Trenneinheit entlang einer Bewegungsrichtung in einer Bewegungsebene bewegbar ist,
- die Platte in der Trenneinheit entlang einer Trennrichtung trennbar ist, so dass ein restlicher Plattenteil und abgetrennter Plattenteil entsteht,
- der abgetrennten Plattenteil der Rückführeinheit zuführbar ist,
- der abgetrennten Plattenteil entlang einer Rückführrichtung mittels der Rückführeinheit bewegbar ist,
- der abgetrennte Plattenteils zur Schwenkeinheit zuführbar ist,
- der abgetrennte Plattenteil mittels der Schwenkeinheit entlang einer Schwenkbewegung verschwenkbar ist,
- der abgetrennte und verschwenkte Plattenteil erneut zur Zuführeinheit und zur Trenneinheit zuführbar ist, und
- der abgetrennten Plattenteile durch die Trenneinheit entlang einer Trennrichtung trennbar ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Vorrichtung zum Trennen bzw. Schneiden von Platten oder Tafeln nach einer Ausführungsform der vorliegenden Erfindung; und
- Fig. 2 bis 13: die Vorrichtung nach Figur 1 in verschiedenen Betriebs- bzw. Verfahrenszuständen.

### BESCHREIBUNG BEVORZUGTER AUSFÜHRUNGSFORMEN

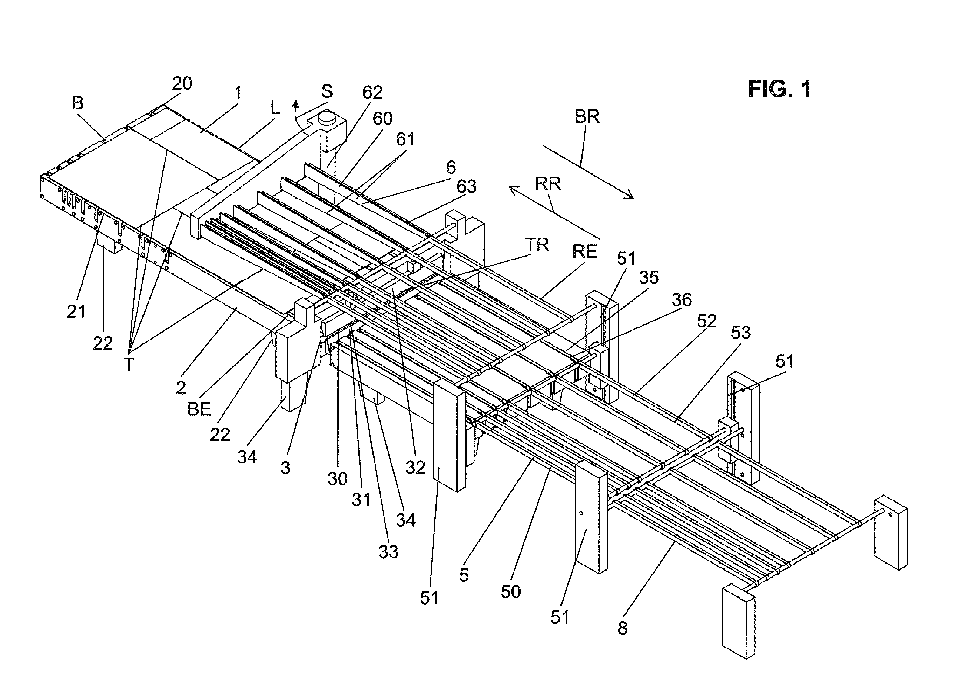

In der Figur 1 wird eine Vorrichtung zur Durchführung eines Verfahrens zum Trennen beziehungsweise Schneiden von Platten 1 gezeigt. Unter einer Platte 1 wird eine flächige Struktur verstanden, welche eine wesentlich grössere Länge L und Breite B aufweist, als Höhe bzw. Dicke. Folglich kann auch gesagt werden, dass die Platte 1 eine geringe Dicke aufweist. Die Platte 1 kann auch als Tafel bezeichnet werden. Die Platte 1 ist vorzugsweise aus Glas oder Holz oder Kunststoff oder Metall, wobei bei letzterem dann von einem Blech gesprochen werden kann. Die Vorrichtung dient also dazu aus einer grossen Platte 1 mehrere kleine Platten zu schneiden bzw. trennen, wobei die Platte sowohl in ihrer Breite B als auch in Ihrer Länge L entsprechend geteilt wird. In der Figur 1 sind symbolisch entsprechende Trennlinien T eingezeichnet, wobei diese hier parallel zur Breite B und zur Länge L der Platte verlaufen. Ein winkliger Verlauf zu Breite B und Länge L ist ebenfalls denkbar.

Die Vorrichtung zum Schneiden bzw. Trennen der Platte umfasst im Wesentlichen eine Zuführeinheit 2, eine Trenneinheit 3 mit einem Trennelement 30, eine Rückführeinheit 5 und eine Schwenkeinheit 6. Die Zuführeinheit 2 dient der Zuführung der Platte zur Trenneinheit 3, die Rückführeinheit 5 dient der Rückführung der Platte zur Zuführeinheit 2 und die Schwenkeinheit 6 dient der Verschwenkung der Platte. Weiter umfasst die Vorrichtung eine optionale Wegführeinheit 8 mit welcher eine zugeschnittene Platte aus der Vorrichtung wegführbar ist. Das Zusammenspiel der Vorrichtungen wird nun in der Folge anhand des erfindungsgemässen Verfahrens genauer beschrieben.

Das Verfahren zum Trennen bzw. Schneiden von Platten umfasst im Wesentlichen die Schritte
- des Bewegens der zu trennenden Platte von der Zuführeinheit 2 in die Trenneinheit 3 entlang einer Bewegungsrichtung BR in einer Bewegungsebene BE,
- des Trennens der Platte 1 in der Trenneinheit 3 entlang einer Trennrichtung TR, so dass ein restlicher Plattenteil 7 und ein abgetrennter Plattenteil 4 entsteht,
- des Zuführens des abgetrennten Plattenteils 4 zur Rückführeinheit 5,
- des Rückführens des abgetrennten Plattenteils 4 entlang einer Rückführrichtung RR mittels der Rückführeinheit 5,
- des Zuführens des abgetrennten Plattenteils 4 zur Schwenkeinheit 6,
- des Verschwenkens des abgetrennten Plattenteils 4 mittels der Schwenkeinheit 6 entlang einer Schwenkbewegung S,
- der erneuten Zuführung des abgetrennten und verschwenkten Plattenteils 4 zur Zuführeinheit 2 und zur Trenneinheit 3, und
- des Trennens des abgetrennten Plattenteils 4 durch die Trenneinheit 3 entlang einer Trennrichtung TR.

Die Bewegungsebene BE und die parallel dazu angeordnete Rückführebene RE liegen vorzugsweise in der Horizontalen und die Bewegung des Plattenteils 4 von der Bewegungsebene BE in die Rückführebene RE erfolgt bevorzugt rechtwinklig zur Horizontalen, also entlang der Vertikalen.

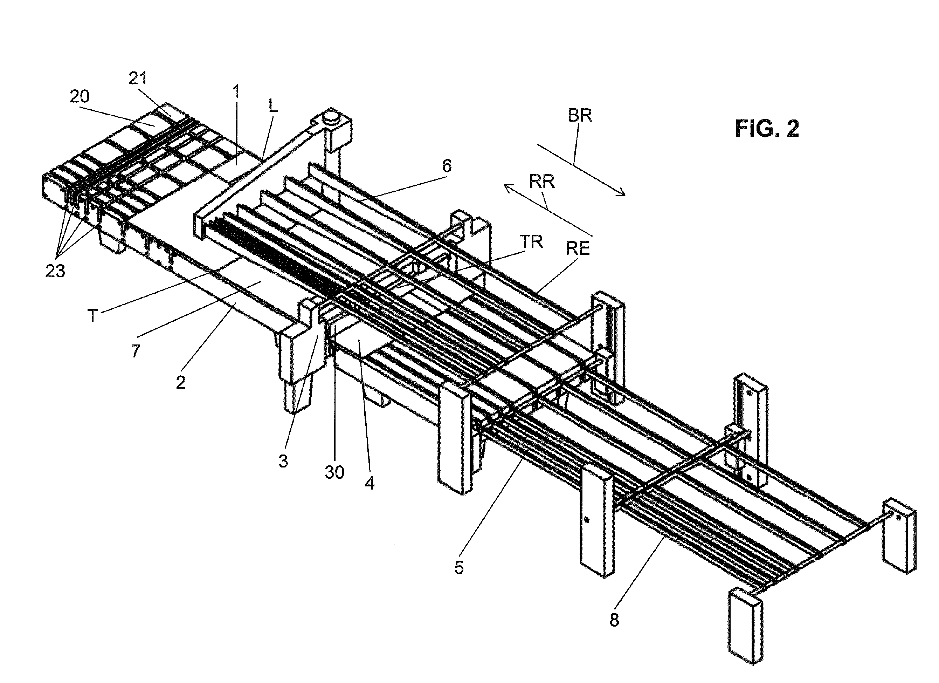

Der Schritt des Bewegens der zu trennenden Platte von der Zuführeinheit 2 in die Trenneinheit 3 entlang der Bewegungsrichtung BR wird in den Figuren 1 und 2 gezeigt. Hier kann gut erkannt werden, wie die Platte 1 durch die Trenneinheit 3 geführt wird und dann von dieser Trenneinheit 3 in einen abgetrennten Plattenteil 4 und einen restlichen Plattenteil 7 geteilt wird. Die Trennung durch die Trenneinheit 3 erfolgt entlang einer Trennrichtung TR, welche zugleich die Trennlinie T zwischen restlichen Plattenteil 7 und abgetrennten Plattenteil 4 definiert. Die Trennrichtung TR verläuft dabei im Wesentlichen rechtwinklig zur Bewegungsrichtung BR. Nach der Trennung liegt der abgetrennte Plattenteil 4 in Bewegungsrichtung BR gesehen vor der Trenneinheit 3 und der restliche Plattenteil 7 liegt hinter der Trenneinheit 3, wobei dieser restliche Plattenteil 3 in der Folge ebenfalls durch die Trenneinheit 3 trennbar ist.

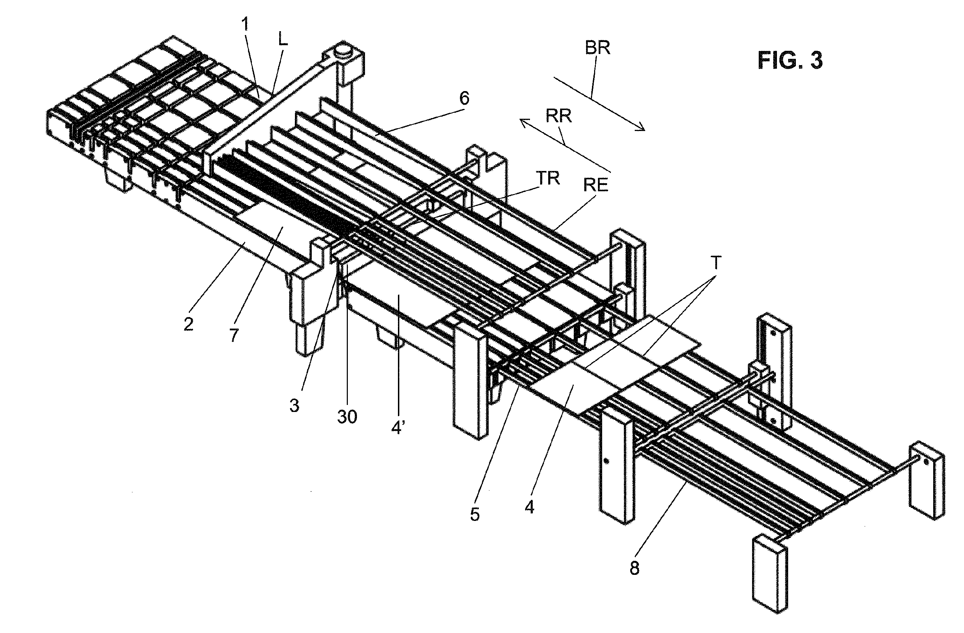

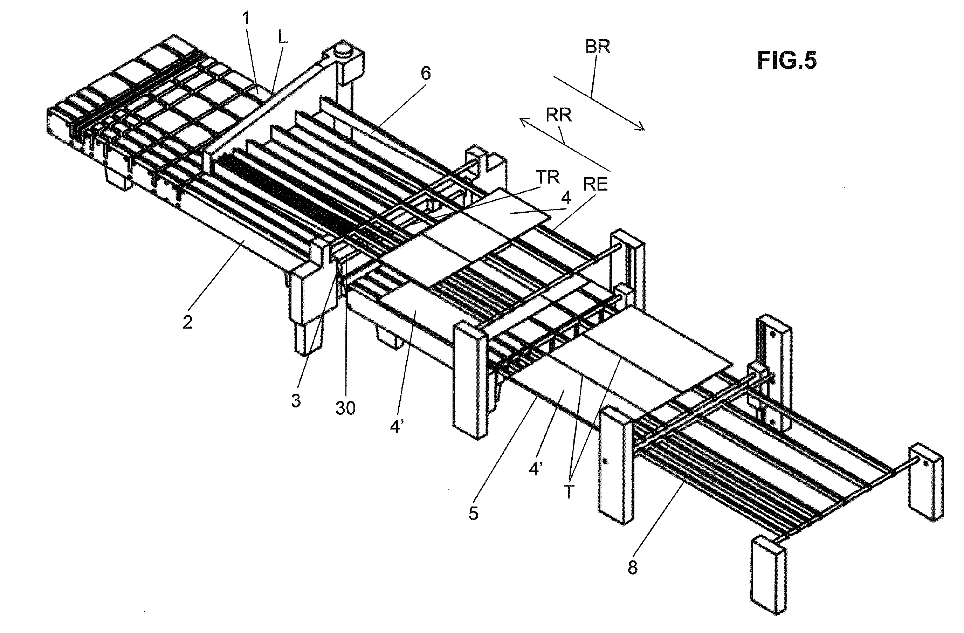

In der Figur 3 kann der Schritt des Zuführens des abgetrennten Plattenteils 4 zur Rückführeinheit 5 erkannt werden. Hierbei wird der abgetrennte Plattenteil 4 auf der Bewegungsebene BE in Bewegungsrichtung BR von der Trenneinheit 3 in die Rückführeinheit 5 vorgeschoben. Sobald der abgetrennte Plattenteil 4 vollständig in der Rückführeinheit 5 liegt, wird der abgetrennte Plattenteil 4 entlang einer Rückführrichtung RR mittels der Rückführeinheit 5 der Schwenkeinheit 6 zurückgeführt. Der Schritt des Rückführens kann in den Figuren 3, 4 und 5 gut erkannt werden. In einem ersten Unterschritt wird hier das abgetrennte Plattenteil 4 von der Bewegungsebene BE in eine Rückführebene RE bewegt. In der vorliegenden Ausführungsform wird das abgetrennte Plattenteil 4 durch eine Hubvorrichtung 50 von der Bewegungsebene BE in eine Richtung gegen die Schwerkraft, also in der Vertikalen, auf die Rückführebene RE angehoben. In einer alternativen Ausführungsform kann sich die Hubvorrichtung 50 absenken, wobei sich dann die Rückführebene RE bezüglich der Vertikalen unterhalb der Bewegungsebene BE befindet. Sobald das abgetrennte Plattenteil 4 die Rückführebene RE erreicht hat, wird das abgetrennte Plattenteil 4 in einem zweiten Unterschritt der Schwenkeinheit 6 zugeführt. Der Schritt der Zuführung des abgetrennten Plattenteils 4 zur Schwenkeinheit 6 kann in der Figur 5 erkannt werden, wobei sich hier das abgetrennte Plattenteil 4 im Wesentlichen oberhalb der Trenneinheit 3 befindet und entlang der Rückführrichtung RR zur Schwenkeinheit 6 bewegt wird.

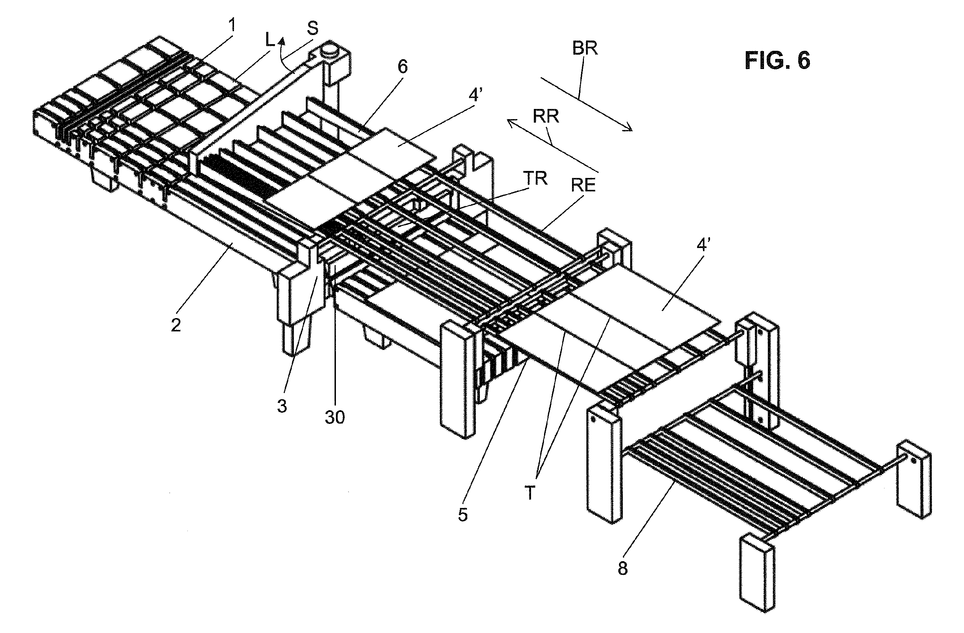

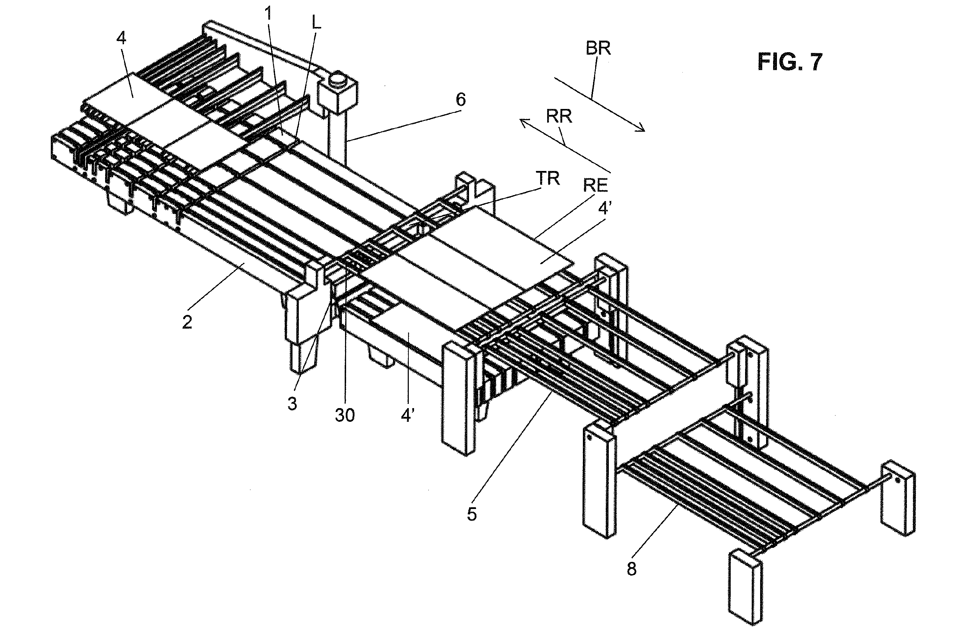

Der Schritt des Verschwenkens des abgetrennten Plattenteils 4 mittels der Schwenkeinheit 6 entlang einer Schwenkbewegung S wird in den Figuren 6 und 7 gezeigt. Die Schwenkeinheit 6 nimmt das abgetrennte Plattenteil 4 auf und wird entlang der Schwenkbewegung S verschwenkt. In der Figur 6 wird dabei die Ausgangsstellung gezeigt und in der Figur 7 wird die Endlage der Schwenkeinheit 6 gezeigt, in welcher der Verschwenkvorgang vollständig ausgeführt wurde. Der abgetrennte Plattenteil 4 liegt dabei auf der Schwenkeinheit 6 und wird durch die Schwenkeinheit 6 um die Schwenkachse verschwenkt. Die Orientierung des abgetrennten Plattenteils ändert sich hier also um einen Schwenkwinkel, welcher durch die Schwenkeinheit 6 bereitgestellt wird. Der Winkel ist bevorzugt 90°, so dass die Trenneinheit 3 die Platte entlang einer anderen Richtung, hier also parallel zur ursprünglichen Länge L der Platte, trennen kann. Folglich sind nach der Verschwenkung die Trennlinien T rechtwinklig zur Bewegungsrichtung BR bzw. parallel zur Trennrichtung TR der Trenneinheit 3 orientiert.

Durch die Verschwenkung kann die Umlenkung der zu trennenden bzw. schneidenden Platte in der Bewegungsebene BE verhindert werden, was den Vorteil hat, dass flächenmässig ein geringerer Platzbedarf benötigt wird. Somit kann die Vorrichtung bezüglich Platzbedarf und Kosten effizienter betrieben werden.

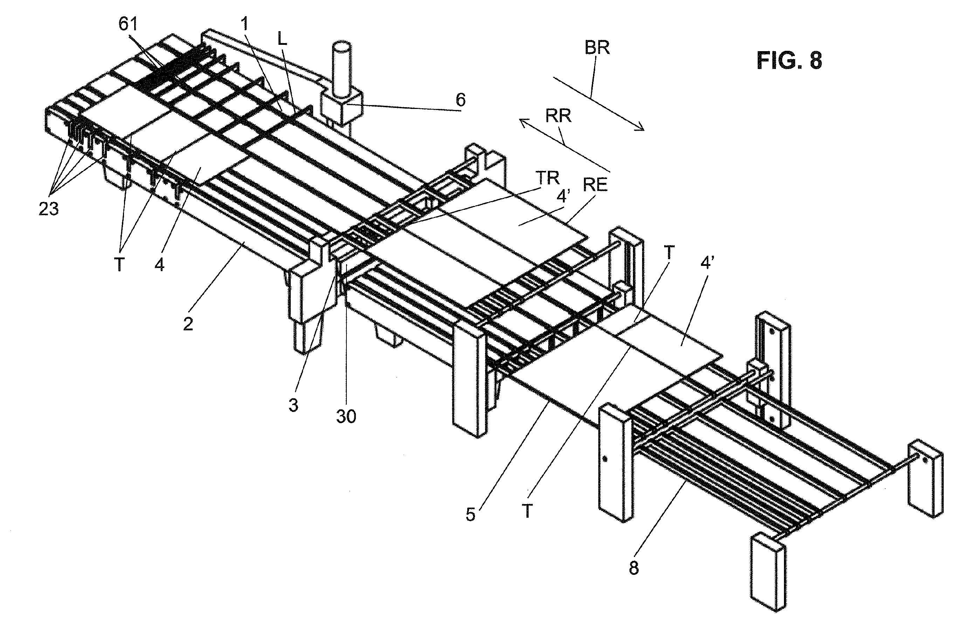

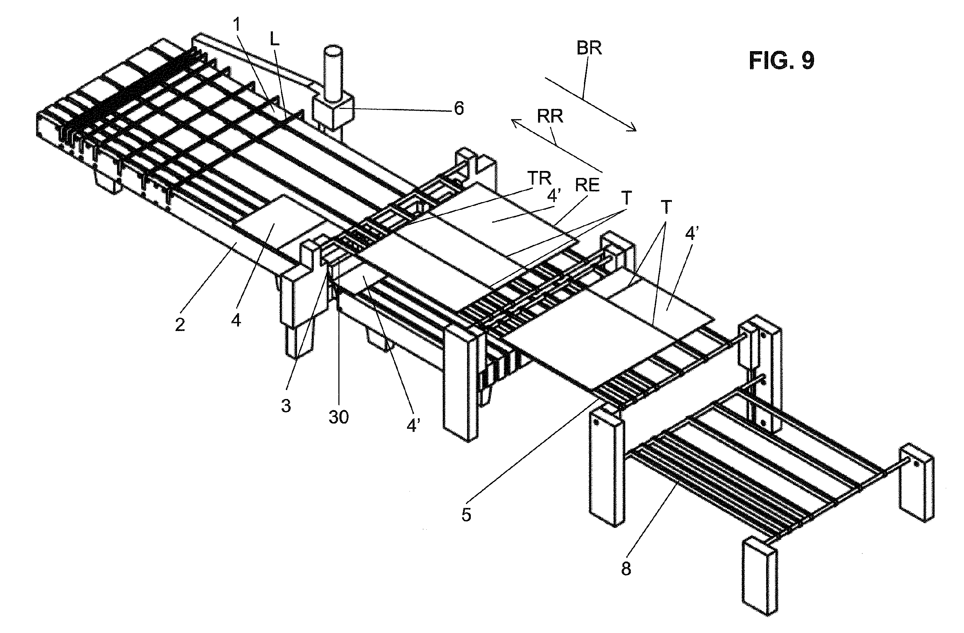

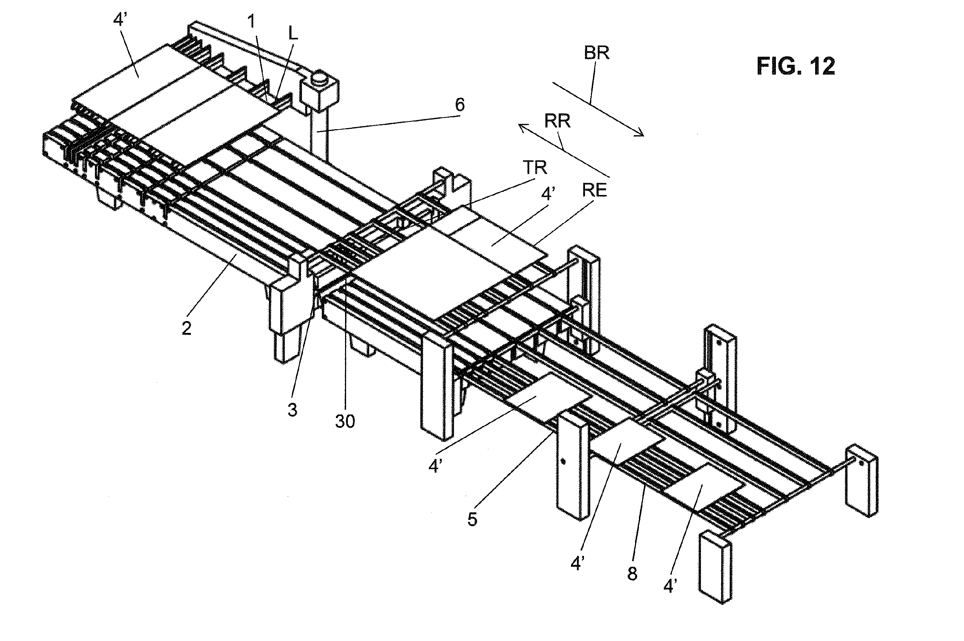

In der Figur 8 wird der Schritt der erneuten Zuführung des abgetrennten und mittlerweile verschwenkten Plattenteils 4 zur Zuführeinheit 2 beziehungsweise zur Trenneinheit 3 gezeigt. Hierfür senkt sich die Schwenkeinheit 6 in der Vertikalen auf die Bewegungsebene BE ab, so dass das abgetrennte Plattenteil 4 auf der Zuführeinheit 2 zu liegen kommt und dann Richtung Trenneinheit 3 bewegt werden kann. Das abgetrennte Plattenteil 4 wird dann durch die Trenneinheit 3 entlang der Trennrichtung TR getrennt. In der Figur 8 sind symbolisch zwei Trennlinien T eingezeichnet. Folglich wird das abgetrennte Plattenteil 4 wiederum in ein abgetrennter Plattenteil 4' und ein restlicher Plattenteil 7' geteilt. Dies kann in der Figur 9 und 12 gut erkannt werden, wobei hier gezeigt wird, dass die abgetrennten Plattenteile 4' die vorbestimmte Grösse erreicht haben und somit über die Wegführeinheit 8 aus der Vorrichtung der weiteren Verarbeitung wegführbar sind. Alternativ sind die abgetrennten Plattenteile 4' auch wieder der Rückführeinheit 5 zuführbar, wobei dann das Verfahren nach den obigen Schritten weiter ausgeführt wird.

Zeitgleich zu den Schritten des Rückführens, des Verschwenkens und der erneuten Zuführung des abgetrennten Plattenteils 4 wird der restliche Plattenteil 7 ebenfalls durch die Trenneinheit 3 getrennt, wobei auch hier wiederum ein weiterer abgetrennter Plattenteil 4 und ein restlicher Plattenteil 7 entsteht. Dieser Schritt wird in den Figuren 3 bis 5 gezeigt. Der abgetrennte Plattenteil 4 wird gemäss der obiger Beschreibung des Verfahrens nach den Schritten des Rückführen, des Verschwenkens und der erneuten Zuführung bearbeitet. Der restliche Plattenteil 7 kann dann weiter geteilt werden oder direkt der Rückführeinheit 5 für die nachfolgenden Schritte des Rückführens, des Verschwenkens und der erneuten Zuführung zugeführt werden. Wenn ein restlicher Plattenteil 7 bereits die vorbestimmte Abmessung erreicht hat, kann diese auch aus der Trenneinheit, hier über die Rückführeinheit 5 und die Wegführeinheit 8 entfernt werden.

Es kann also gesagt werden, dass das Verfahren weiter den Schritt des Trennens des restlichen Plattenteils 7 durch die Trenneinheit 5 umfasst, so dass ein weiteres abgetrenntes Plattenteil 4' entsteht und der Rückführeinheit, Schwenkeinheit und Trenneinheit zuführbar ist. Weiter umfasst das Verfahren den Schritt des Rückführens des gesamten restlichen Plattenteils 7, wobei das gesamte restliche Plattenteil 7 der Rückführeinheit, Schwenkeinheit und Trenneinheit zuführbar ist. Diese Schritte erfolgen vorzugsweise zeitgleich mit dem Schritt des Rückführens bzw. Verschwenkes des bereits abgetrennten Plattenteils 4, so dass ein kontinuierlich laufendes Verfahren bereitstellbar ist.

Durch den Schritt der Rückführung, insbesondere in der Rückführebene RE, hat den Vorteil, dass verschiedene Verfahrensschritte bei mehreren Plattenteilen zeitgleich erfolgen können, was eine höhere Leistung bedeutet. Es können als mehr Schnitte pro Zeiteinheit ausgeführt werden. Folglich erlaubt das Verfahren nicht nur die Bereitstellung einer Vorrichtung mit geringem Platzbedarf, sondern kann ebenfalls noch effizienter betrieben werden.

Wie von den Figuren gut erkennbar ist, verläuft die Rückführrichtung RR entgegen der Bewegungsrichtung BR, so dass der abgetrennte Plattenteil 4 durch die Rückführeinheit 5 entgegen der Bewegungsrichtung BR bewegbar ist. Durch diese gegenläufige Bewegung kann die Kompaktheit der Vorrichtung weiter erhöht werden. Bevorzugterweise liegen die Rückführrichtung und die Bewegungsrichtung in der Vertikalen gesehen im Wesentlichen exakt übereinander, so dass hier weiterer Platz eingespart werden kann, weil die maximale Breite der Maschine dadurch nicht grösser gewählt werden muss, da die Platten in Bewegungsrichtung gesehen immer übereinander liegen.

Die Schwenkbewegung des abgetrennten Plattenteils erfolgt vorzugsweise in der Rückführebene RE. Die Rückführebene RE liegt dabei parallel versetzt von der Bewegungsebene BE, wie dies oben bereits erläutert wurde. Alternativ kann die Verschwenkung auch in einer anderen Ebene erfolgen, welche parallel versetzt von der Bewegungsebene BE.

Während oder nach dem Schritt des Verschwenkens des abgetrennten Plattenteils 4 wird der abgetrennte Plattenteil 4 in die Bewegungsebene BE bewegt, wobei diese Bewegung bevorzugt direkt durch die Schwenkeinheit 6 bereitgestellt wird.

Bei der kombinierten Bewegung, also wenn die Schwenkbewegung während der Bewegung des abgetrennten Plattenteils auf die Bewegungsebene BE kombiniert ist, kann die Bearbeitungszeit weiter reduziert werden. Folglich erfolgt hier die Verschwenkung während der Bewegung der Schwenkeinheit von der Rückführebene RE auf die Bewegungsebene BE.

Das Verfahren umfasst weiterhin den optionalen Schritt des Speichern der abgetrennten Plattenteile 4 bzw. der restlichen Plattenteile 7 in einer Speichereinheit, den Schritt der Entnahme von gespeicherten Plattenteile 4, 7 aus der Speichereinheit und den Schritt der Zuführung der aus der Speichereinheit entnommenen Plattenteile 4, 7 zur Rückführeinheit 5 oder zur Schwenkeinheit 6 oder zur Zuführeinheit 2. Die Speichereinheit ist in den Figuren nicht dargestellt, kann aber im Bereich der Rückführeinheit, Schwenkeinheit oder der Zuführeinheit angeordnet werden.

In der Figur 8 wird weiter gezeigt, dass die verschwenkte Platte 4 nun auf der Zuführeinheit 2 aufliegt. Die weiteren abgetrennten Plattenteile 4 und 4' befinden sich im Bereich der Rückführeinheit 5.

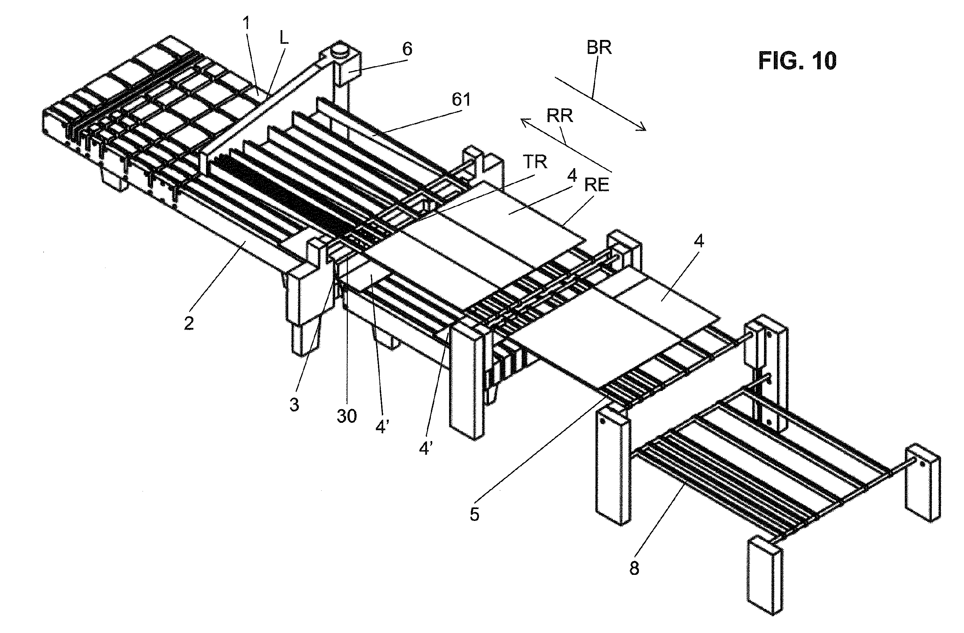

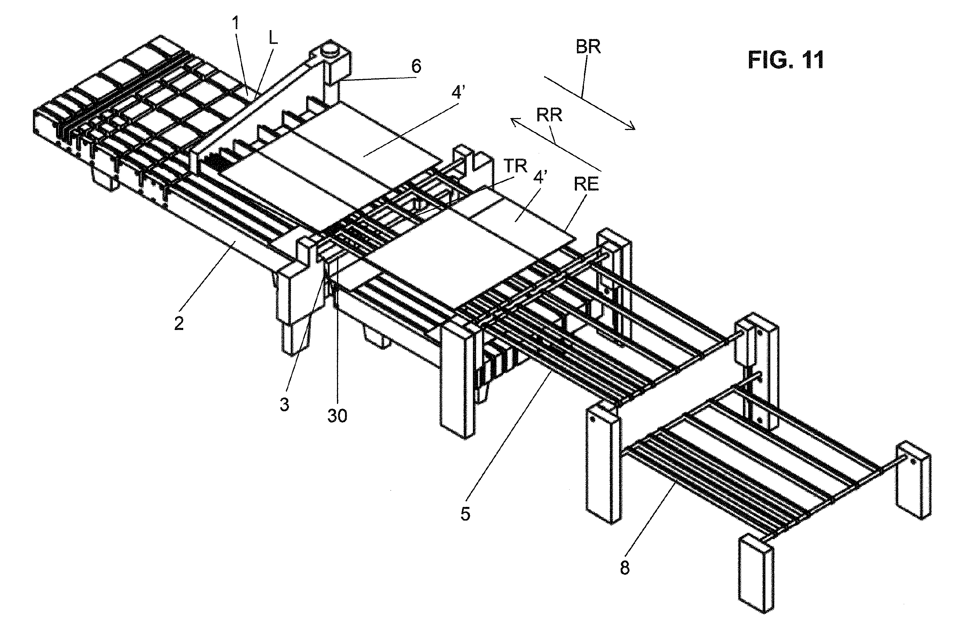

In der Figur 9 wird gezeigt, dass der abgetrennte Plattenteil 4 der Trenneinheit 3 zugeführt wird und dort wiederum geteilt wird. Die weiteren abgetrennten Plattenteile 4' befinden sich hier weiter im Bereich der Rückführeinheit 5. In der Figur 10 befindet sich ein abgetrenntes Plattenteil 4' kurz vor der Übergabe zur Schwenkeinheit 6 und in der Figur 11 wird das abgetrennte Plattenteil 4' bereits in der Schwenkeinheit 6 gezeigt. Das weitere Plattenteil 4' befindet sich im Bereich der Transfereinheit 54.

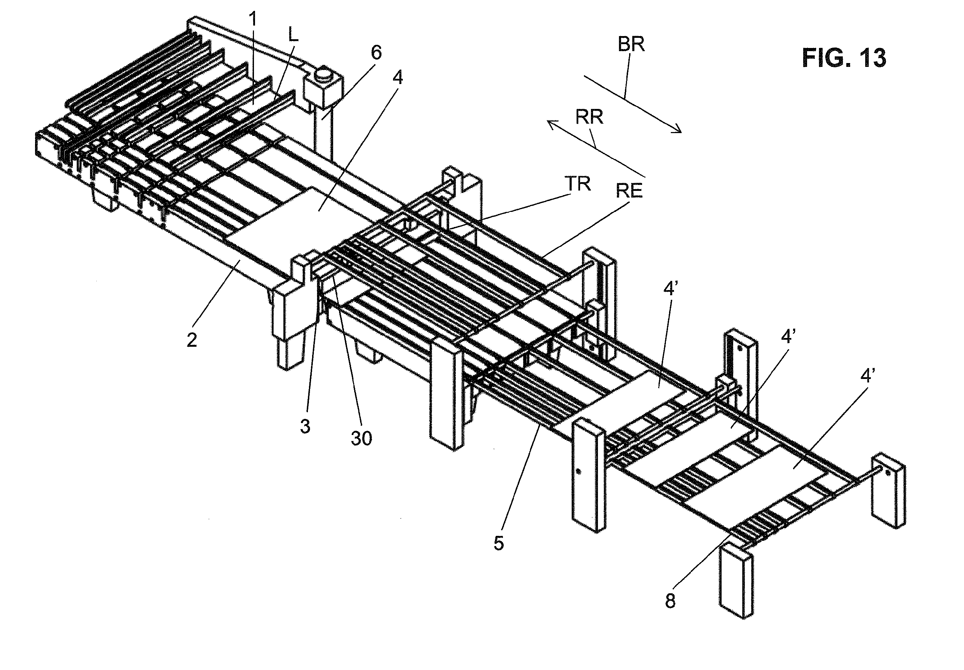

In der Figur 12 wird dann weiter gezeigt, wie das weiteres abgetrennte Plattenteil 4' durch die Schwenkeinheit 6 verschwenkt wurde. In der Figur 13 wird dann gezeigt, dass das abgetrennte Plattenteil 4' in drei weitere Plattenteile getrennt wurde und diese der Wegführeinheit 8 zugeführt werden.

Unter Bezugnahme auf die Figur 1 wird nun in der Folge die Vorrichtung zur Durchführung des Verfahrens genauer erläutert. Die Vorrichtung umfasst, wie oben bereits kurz erläutert, eine Zuführeinheit 2, eine Trenneinheit 3 mit einem Trennelement 30, eine Rückführeinheit 5 und eine Schwenkeinheit 6, wobei
- die zu trennende Platte von der Zuführeinheit 2 in die Trenneinheit 3 entlang einer Bewegungsrichtung BR in einer Bewegungsebene BE bewegbar ist,
- die Platte 1 in der Trenneinheit entlang einer Trennrichtung TR trennbar ist, so dass ein restlicher Plattenteil 7 und abgetrennter Plattenteil 4 entsteht,
- der abgetrennten Plattenteil 4 der Rückführeinheit 5 zuführbar ist,
- der abgetrennten Plattenteil entlang einer Rückführrichtung RR mittels der Rückführeinheit 5 bewegbar ist,
- der abgetrennte Plattenteil 4 zur Schwenkeinheit 6 zuführbar ist,
- der abgetrennte Plattenteil 4 mittels der Schwenkeinheit 6 entlang einer Schwenkbewegung S verschwenkbar ist,
- der abgetrennte und verschwenkte Plattenteil 4 erneut zur Zuführeinheit 2 und zur Trenneinheit 3 zuführbar ist, und
- der abgetrennten Plattenteile 1 durch die Trenneinheit 3 entlang einer Trennrichtung TR trennbar ist.

Die Zuführeinheit 2 umfasst im Wesentlichen einen Auflagetisch 20, auf welchem die zu trennenden Plattenteile 1, 4, 7 aufliegen. Der Auflagetisch 20 umfasst dabei Antriebsmittel, wie Antriebsrollen oder Antriebsbänder oder Antriebsklemmen, welche die zu trennenden Plattenteile 1, 4, 7 in Bewegungsrichtung BR zur Trenneinheit 3 zuführen können. Vorzugswiese ist der Auflagetisch 20 als Luftkissentisch ausgebildet, wobei die Plattenteile dann auf einem Luftkissen gleiten. Die Oberfläche 21 des Auflagetisches 20 definiert im Wesentlichen die Bewegungsebene B. Über Stützen 22 steht die Zuführeinheit 2 auf einem Boden zum Beispiel einer Werkhalle auf.

In der Figur 2 kann erkannt werden, dass sich von der Oberfläche 21 des Auflagetisches 20 eine Vielzahl von Rillen 23 oder Nuten in den Auflagetisch 20 hinein erstrecken. Die Rillen 23 dienen im Wesentlichen der Aufnahme von Teilen der Schwenkeinheit, insbesondere von Schwenkarmen, während des Vorgangs der Zuführung des verschenkten Plattenteils 4, 4' auf die Zuführeinheit, wie dies weiter unten im Zusammenhang mit der Schwenkeinheit weiter erläutert wird. Die Rillen 23 verlaufen dabei parallel und/oder rechtwinklig zur Bewegungsrichtung BR.

Die Trenneinheit 3 umfasst ein Trennelement 30, welches je nach zu trennendem Material anders ausgebildet sein kann. Hier umfasst das Trennelement 30 zwei Trennbalken 31, 32 mit Trennkanten 33. Die Trennkante 33 des unteren Trennbalkens 31 liegt in der Bewegungsebene BE und ist vorzugsweise fest, also unbeweglich, angeordnet. Die Trennkante 33 des oberen Trennbalkens 32 liegt hier über der Bewegungsebene BE und ist bewegbar zum unteren Trennbalken 31 angeordnet. Die Trenneinheit 3 umfasst hier Stützen 34, über welche die Trenneinheit 3 auf dem Boden aufsteht. Alternativ kann die Trenneinheit 3 auch als Säge ausgebildet sein. Im Falle der Trennung von Glas, kann die Trenneinheit 3 auch mit zusätzlichem Ritzelement ausgebildet sein, so dass die Oberfläche des Glases angeritzt werden kann.

Weiter umfasst die Trenneinheit 3 einen Aufnahmetisch 35, welcher in Bewegungsrichtung BR gesehen hinter der Trenneinheit 3 angeordnet ist. Der Aufnahmetisch 35 dient der Aufnahme des abgetrennten Plattenteils 4 nach dem Vorgang des Trennens der Plattenteile. Der Aufnahmetisch 35 umfasst Antriebsmittel 36, wie Antriebsrollen oder Antriebsbänder oder Antriebsklemmen, welche den abgetrennten Plattenteil 4 weiter zur Rückführeinheit 5 bewegen.

Die Rückführeinheit 5, welche sich der Trenneinheit 3, hier dem Aufnahmetisch 35 der Trenneinheit 3 anschliesst, umfasst im Wesentlichen einen Hubtisch bzw. eine Hubvorrichtung 50, welcher sich senkrecht zur Bewegungsebene BE bewegen lässt. Durch den Hubtisch 50 lassen sich die abgetrennten Plattenteile 4 von der Bewegungsebene BE in die Rückführebene RE bewegen, wobei der Hubtisch 50 von der Bewegungsebene BE gesehen, absenkbar oder anhebbar ist. Der Hubtisch 50 ist dabei über Führungen 51 gelagert und entlang diesen Führungen 51 mittels einem nicht gezeigten Aktuator, wie beispielsweise einem Linearantrieb, bewegbar. Weiter umfasst der Hubtisch 50 eine Oberfläche 52, auf welcher die abgetrennten Plattenteile 4 zu liegen kommen, und Antriebsmittel 53, welche die abgetrennten Plattenteile 4 bezüglich auf der Oberfläche 52 des Hubtisches 50 bewegen. Die Antriebsmittel 53 können die Gestalt von Antriebsrollen oder Antriebsbänder oder Antriebsklemmen aufweisen. Wichtig ist, dass die Antriebsmittel 53 die Plattenteile 4 sowohl in der Bewegungsrichtung BR als auch in der Rückführrichtung RR bewegen können.

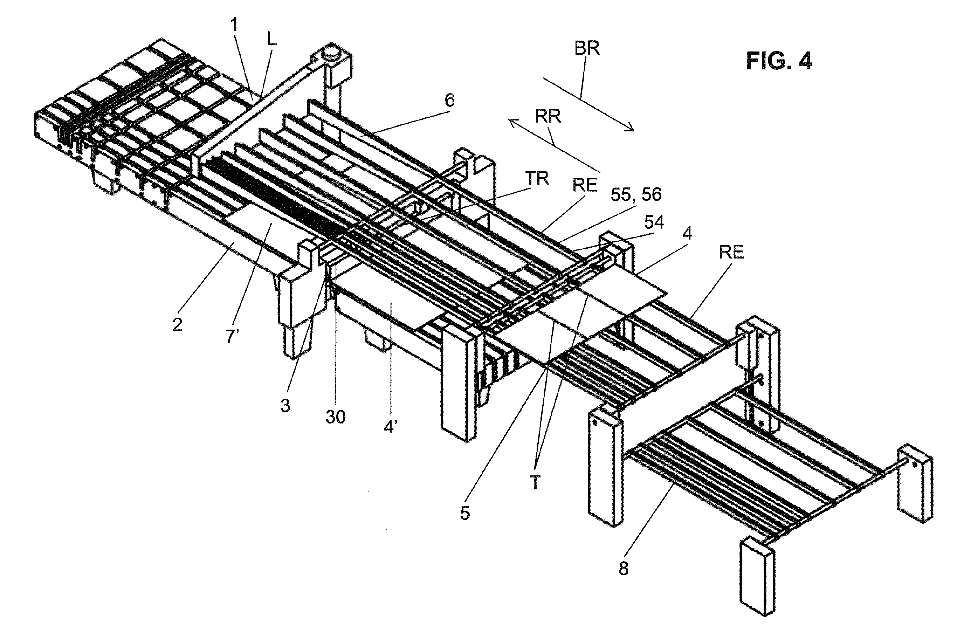

In der Figur 4 wird der Hubtisch 50 in der oberen Position, also auf der Höhe Rückführebene RE gezeigt. In dieser Position wird der abgetrennte Plattenteil 4 über eine ebenfalls zur Rückführeinheit 5 gehörenden Transfereinheit 54 der Schwenkeinheit 6 zugeführt. Die Transfereinheit 54 umfasst eine in der Rückführebene RE liegende Oberfläche 55 und geeignete Antriebsmittel 56, wie Antriebsrollen oder Antriebsbänder oder Antriebsklemmen, welche die Plattenteile 4 über die Transfereinheit 54 bewegen.

Der Rückführeinheit 4, hier der Transfereinheit 54, schliesst sich die Schwenkeinheit 6 an. Die Schwenkeinheit 6 umfasst einen Schwenktisch 60 mit Aufnahmefingern 61 und eine Schwenksäule 62, mit welcher der Schwenktisch verschwenkbar in Verbindung steht. Der Schwenktisch 60 ist somit um die Schwenksäule 62 verschwenkbar. Die Schwenksäule 62 umfasst hierfür einen entsprechenden Antrieb, um die Verschwenkung bereitzustellen. Weiter umfasst die Schwenksäule 62 einen Linearantrieb um den Schwenktisch von der Rückführebene RE in die Bewegungsebene BE zu bewegen. Die Aufnahmefinger 61 stellen eine Oberfläche 63 bereit, welche jeweils in der entsprechenden Ebene BE oder RE zu liegen kommt. Weiter umfassen die Aufnahmefinger 61 Antriebsmittel, wie Antriebsrollen oder Antriebsbänder oder Antriebsklemmen welche die Plattenteile 4 auf dem Schwenktisch bewegen.

Wie oben erwähnt bewegt sich der Schwenktisch 60 nach oder während der Verschwenkung von der Rückführebene RE auf die Bewegungsebene BE. Dabei werden die ursprünglich in Rückführrichtung RR orientierten Aufnahmefinger 61 um den Verschwenkwinkel verschwenkt und kommen so rechtwinklig zur Rückführrichtung RR bzw. zur Bewegungsrichtung BR zu liegen.

In der Figur 8 kann gut erkannt werden, wie die Aufnahmefinger 61 in die Rillen 23 des Auflagetisches 20 einragen und so das verschwenkte abgetrennte Plattenteil 4 auf dem Auflagetisch 20 der Zuführeinheit 2 absetzen. Sobald das abgetrennte Plattenteil 4 dann erneut der Trenneinheit 3 zugeführt wird, fährt der Verschwenktisch 60 wiederum in die Rückführebene RE in die ursprüngliche Position und der Schwenktisch ist somit bereit, erneut ein abgetrenntes Plattenteil 4 aufzunehmen. Dies wird in der Figur 10 entsprechend gezeigt.

### BEZUGSZEICHENLISTE

| | | | |
|---|---|---|---|
| 1 | Platte | 50 | Hubvorrichtung |
| 2 | Zuführeinheit | 51 | Führungen |
| 3 | Trenneinheit | 52 | Oberfläche |
| 4 | abgetrennter Plattenteil | 53 | Antriebsmittel |
| 4' | weiterer abgetrennter Plattenteil | 54 | Transfereinheit |
| 5 | Rückführeinheit | 55 | Oberfläche |
| 6 | Schwenkeinheit | 56 | Antriebsmittel |
| 7 | restlicher Plattenteil | | |
| 7' | weiterer restlicher Plattenteil | 60 | Schwenktisch |
| 8 | Wegführeinheit | 61 | Aufnahmefinger |
| | | 62 | Schwenksäule |
| 20 | Auflagetisch | | |
| 21 | Oberfläche | B | Breite |
| 22 | Stützen | L | Länge |
| 23 | Rillen | T | Trennlinien |
| | | TR | Trennrichtung |
| 30 | Trennelement | BE | Bewegungsebene |
| 31 | erster Trennbalken | BR | Bewegungsrichtung |
| 32 | zweiter Trennbalken | | |
| 33 | Trennkante | RE | Rückführebene |
| 34 | Stützen | RR | Rückführrichtung |
| 35 | Aufnahmetisch | S | Schwenkbewegung |
| 36 | Antriebsmittel | | |

## Patentansprüche

1. Verfahren zum Trennen bzw. Schneiden von Platten (1), **gekennzeichnet durch** die die Schritte
- des Bewegens der zu trennenden Platte von einer Zuführeinheit (2) in eine Trenneinheit (3) entlang einer Bewegungsrichtung (BR) in einer Bewegungsebene (BE);
- des Trennens der Platte (1) in der Trenneinheit (3) entlang einer Trennrichtung (TR), so dass ein restlicher Plattenteil (7) und abgetrennter Plattenteil (4) entsteht;
- des Zuführens des abgetrennten Plattenteils (4) zu einer Rückführeinheit (5);
- des Rückführens des abgetrennten Plattenteils (4) entlang einer Rückführrichtung (RR) mittels der Rückführeinheit (5);
- des Zuführens des abgetrennten Plattenteils (4) zu einer Schwenkeinheit (6);
- des Verschwenkens des abgetrennten Plattenteils (4) mittels der Schwenkeinheit (6) entlang einer Schwenkbewegung (S);
- der erneuten Zuführung des abgetrennten und verschwenkten Plattenteils (4) zur Zuführeinheit (2) und zur Trenneinheit (3); und
- des Trennens des abgetrennten Plattenteils (4) **durch** die Trenneinheit (3) entlang einer Trennrichtung (TR).

2. Verfahren nach Anspruch 1, **dadurch gekennzeichnet, dass** der durch die Rückführeinheit (5) bewegte abgetrennte Plattenteil (4) in einer von der Bewegungsebene (BE) unterschiedlichen Rückführebene (RE) bewegt wird, wobei die Rückführebene (RE) bezüglich der Richtung der Schwerkraft gesehen oberhalb oder unterhalb der Bewegungsebene (BE) liegt.

3. Verfahren nach Anspruch 1 oder 2, **dadurch gekennzeichnet, dass** die Rückführrichtung (RR) gegen die Bewegungsrichtung (BR) verläuft, so dass der abgetrennte Plattenteil (4) durch die Rückführeinheit (5) entgegen der Bewegungsrichtung (BR) bewegbar ist.

4. Verfahren nach einem der vorhergehenden Ansprüche, **dadurch gekennzeichnet, dass** die Schwenkbewegung (S) des abgetrennten Plattenteils in einer Ebene erfolgt, welche parallel versetzt von der Bewegungsebene (BE) liegt und vorzugsweise der Rückführebene (BE) entspricht und/oder dass durch die Schwenkbewegung der Schwenkeinheit (6) der abgetrennte Plattenteil (4) um einen Schwenkwinkel von 90° verschwenkt.

5. Verfahren nach einem der vorhergehenden Ansprüche, **dadurch gekennzeichnet, dass** während oder nach dem Schritt des Verschwenkens des abgetrennten Plattenteils (4) der abgetrennte Plattenteil (4) von der Rückführebene (RE) in die Bewegungsebene (BE) bewegt wird, wobei diese Bewegung bevorzugt durch die Schwenkeinheit (6) bereitgestellt wird.

6. Verfahren nach einem der vorhergehenden Ansprüche, **dadurch gekennzeichnet, dass** das Verfahren den Schritt des Trennens des restlichen Plattenteils (7) durch die Trenneinheit umfasst, so dass mindestens ein weiteres abgetrenntes Plattenteil (4') entsteht und der Rückführeinheit (5), Schwenkeinheit (6) und Trenneinheit (3) zuführbar ist, wobei dieser Schritt des Trennens vorzugweise im wesentlichen zeitgleich mit der Rückführung bzw. Verschwenkung des bereits abgetrennten Plattenteils (4) erfolgt oder,
dass das Verfahren den Schritt des Rückführens des gesamten restlichen Plattenteils (7) umfasst, wobei der gesamte restliche Plattenteil (7) der Schwenkeinheit und Trenneinheit zuführbar ist, wobei dieser Schritt des Trennens vorzugweise im Wesentlichen zeitgleich mit der Rückführung bzw. Verschwenkung des bereits abgetrennten Plattenteils (4) erfolgt.

7. Verfahren nach einem der vorhergehenden Ansprüche, **dadurch gekennzeichnet, dass** das Verfahren weiter den Schritt des Wegführens des abgetrennten Plattenteils (4, 4') bzw. des restlichen Plattenteils (7) umfasst, wenn das abgetrennte Plattenteil (4, 4') bzw. das restliches Plattenteil (7) auf ein vordefiniertes bzw. gewünschtes Mass verkleinert wurde, wobei das entsprechende Plattenteil (4, 4`, 7) vorzugweise einer Wegführeinheit (8) zugeführt wird.

8. Verfahren nach einem der vorhergehenden Ansprüche, **dadurch gekennzeichnet, dass** das Verfahren weiterhin den Schritt des Speichern der abgetrennten Plattenteile (4) bzw. der restlichen Plattenteile (7) in einer Speichereinheit, den Schritt der Entnahme von gespeicherten Plattenteile (4, 4'. 7) aus der Speichereinheit und den Schritt der Zuführung der aus der Speichereinheit entnommenen Plattenteile (4, 4', 7) zur Rückführeinheit (5) oder zur Schwenkeinheit (6) oder zur Zuführeinheit (2) umfasst.

9. Verfahren nach einem der vorhergehenden Ansprüche, **dadurch gekennzeichnet, dass** die Platte die Gestalt einer Glasplatte oder Kunststoffplatte oder eines metallischen Bleches oder einer Holzplatte aufweist.

10. Verfahren nach einem der vorhergehenden Ansprüche, **dadurch gekennzeichnet, dass** die Trennrichtung (TR) rechtwinklig zur Bewegungsrichtung (BR) verläuft.

11. Vorrichtung zur Durchführung des Verfahrens nach einem der vorhergehenden Ansprüche, wobei die Vorrichtung eine Zuführeinheit (2), eine Trenneinheit (3) mit einem Trennelement (30), eine Rückführeinheit (5) und eine Schwenkeinheit (6) umfasst, wobei
- die zu trennende Platte von der Zuführeinheit (2) in die Trenneinheit (3) entlang einer Bewegungsrichtung (BR) in einer Bewegungsebene (BE) bewegbar ist;
- die Platte (1) in der Trenneinheit (3) entlang einer Trennrichtung (TR) trennbar ist, so dass ein restlicher Plattenteil (7) und abgetrennter Plattenteil (4) entsteht;
- der abgetrennten Plattenteil (4) der Rückführeinheit (5) zuführbar ist;
- der abgetrennten Plattenteil (4) entlang einer Rückführrichtung (RR) mittels der Rückführeinheit (5) bewegbar ist;
- der abgetrennte Plattenteils zur Schwenkeinheit (6) zuführbar ist;
- der abgetrennte Plattenteil (4) mittels der Schwenkeinheit (6) entlang einer Schwenkbewegung (S) verschwenkbar ist;
- der abgetrennte und verschwenkte Plattenteil (4) erneute zur Zuführeinheit (2) und zur Trenneinheit (3) zuführbar ist; und
- der abgetrennten Plattenteile (1) durch die Trenneinheit (3) entlang einer Trennrichtung (TR) trennbar ist.

12. Vorrichtung nach Anspruch 11, **dadurch gekennzeichnet, dass** die Rückführeinheit (5) eine Hubvorrichtung (50) umfasst, welche den durch die Trenneinheit (3) abgetrennten Plattenteil (4) von der Bewegungsebene (BE) in eine von der Bewegungsebene (BE) versetzt angeordnete Rückführebene (RE) bewegt, wobei die Rückführebene (RE) bezüglich der Richtung der Schwerkraft gesehen vorzugsweise über der Bewegungsebene (BE) liegt und die Hubvorrichtung (50) den abgetrennten Plattenteil (4) in die Bewegungsebene (BE) bewegt, insbesondere anhebt.

13. Vorrichtung nach einem der Ansprüche 11 oder 12, **dadurch gekennzeichnet, dass** die Schwenkeinheit (6) eine Schwenkachse (60) und einen mit der Schwenkachse (60) in Verbindung stehender Schwenkarm (61) umfasst, wobei der Schwenkarm (61) vorzugsweise ein Hubelement (62) umfasst, mit welchen der Schwenkarm (61) und somit der auf dem Schwenkarm (61) aufliegende Plattenteil von der Rückführebene (Z) in die Bewegungsebene (E) bewegbar ist.

14. Vorrichtung nach einem der Ansprüche 11 bis 13, **dadurch gekennzeichnet, dass** die Vorrichtung weiterhin eine Speichervorrichtung zur Speicherung von Plattenteilen (4, 4', 7) insbesondere von abgetrennten Plattenteilen (4, 4`) umfasst.
